# EUROPEAN PATENT APPLICATION

(11) **EP 4 761 071 A1**
(43) Date of publication of application: **17.06.2026**
(21) Application number: 25210572.1
(22) Date of filing: 22.10.2025
(51) Int. Cl.: H02K 3/24, H02K 3/34, H02K 3/48, H02K 3/487

(54) **COMPONENT FOR AN ELECTRICAL MACHINE AND METHOD OF FORMING AN ELECTRICAL MACHINE**

(30) Priority: 10.12.2024 US 202418975801
(71) Applicant: GE Aviation Systems LLC, Grand Rapids, MI 49512 (US)
(72) Inventor: GULLEY, Jason Randall, Dayton, 45409 (US); JIA, Xiaochuan, Dayton, 45409 (US); HUANG, Kui, Dayton, 45409 (US); ZHANG, Lili, Dayton, 45409 (US)
(74) Representative: Openshaw & Co.

(57) **Abstract**

A component (52), (54) for an electrical machine (14) includes an annular body (105), (113) having a set of slots (106), (111) extending axially along a periphery of the body (105), (113). A support block (131) having an elongate body (133) defining a first bore (135) extending axially therethrough is disposed within a respective slot (106), (111). A first electrically conductive winding (90), (109) is disposed to extend axially through the first bore (135).

## Description

### TECHNICAL FIELD

This disclosure generally relates to electrical machines, and more specifically to a support block for a set of electrically conductive windings within a stator core or a rotor core of the electrical machine.

### BACKGROUND

Electrical machines, such as electrical motors or electrical generators, are used in energy conversion. In the aircraft industry, it is common to find an electrical motor having a combination of motor and generator modes, where the electrical machine, in motor mode, is used to start an aircraft engine, and, depending on the mode, functions as a generator, too, to supply electrical power to the aircraft systems. The electrical machine can further drive other portions of the aircraft engine such as a forward fan or a propeller. Regardless of the mode, an electrical machine typically includes a stator with electrically conductive windings that works in conjunction with a rotor that also has respective electrically conductive windings and is driven to rotate by a source of rotation, which for a generator can be a gas turbine engine or for a motor can be the stator.

### BRIEF DESCRIPTION OF THE DRAWINGS

A full and enabling disclosure of the present description, including the best mode thereof, directed to one of ordinary skill in the art, is set forth in the specification, which makes reference to the appended FIGS., in which:
FIG. 1 is an isometric view of a gas turbine engine having a generator, in accordance with various aspects described herein.
FIG. 2 is an isometric view of an exterior of the generator of FIG. 1, in accordance with various aspects described herein.
FIG. 3 is a schematic cross-sectional view of the generator of FIG. 2, taken along line III-III of FIG. 2, in accordance with various aspects described herein.
FIG. 4A is an isometric view of a stator, in accordance with various aspects described herein.
FIG. 4B is a perspective view of a rotor, in accordance with various aspects described herein.
FIG. 5 is a schematic cross-sectional view of a portion of a stator winding, in accordance with various aspects as described herein.
FIG. 6A is a perspective view of an exemplary support block, in accordance with various aspects as described herein.
FIG. 6B is a perspective view of another exemplary support block, in accordance with various aspects as described herein.
FIG. 7 is a perspective view of a portion of another exemplary stator core, in accordance with various aspects as described herein.
FIG. 8A is an isometric view of another portion of an exemplary stator core depicting another exemplary support block support block therein, in accordance with various aspects as described herein.
FIG. 8B is an isometric view of another portion an exemplary stator core depicting yet another exemplary support block support block therein, in accordance with various aspects as described herein.
FIG. 8C is an isometric view of another portion of an exemplary stator core depicting still another exemplary support block support block therein, in accordance with various aspects as described herein
FIG. 9 is a flow diagram depicting a method of forming a stator core for an electrical machine, in accordance with various aspects as described herein.

### DETAILED DESCRIPTION

Aspects of the disclosure can be implemented in any wound stator, rotor, or electrical machine having a set of slots wound with conductive windings. For ease of description and brevity, aspects of the disclosure are described in terms of a stator for an electrical machine, but it is understood that the description applies, mutatis mutandis, equally to a rotor for an electrical machine without departing from the scope of the disclosure. The conductive windings (e.g., stator windings, rotor windings, or both) can include a conductor core, and an insulation layer can circumferentially surround the conductor core. For purposes of this description, the stator, or rotor, are described with respect to an electrical machine, electrical machine, generator, or similar language, which is meant to clarify that one or more stator or rotor combinations can be included in the machine. Non-limiting aspects of an electrical machine can include an electrical generator, an electrical motor, a starter/generator, a transformer, an inductor or the like.

While "a set of" various elements will be described, it will be understood that "a set" can include any number of the respective elements, including only one element. As used herein, the terms "axial" or "axially" refer to a dimension along a longitudinal axis of a generator or along a longitudinal axis of a component disposed within the generator.

As used herein, the terms "radial" or "radially" refer to a dimension extending between a center longitudinal axis, an outer circumference, or a circular or annular component disposed thereof. The use of the terms "proximal" or "proximally," either by themselves or in conjunction with the terms "radial" or "radially," refers to moving in a direction toward the center longitudinal axis, or a component being relatively closer to the center longitudinal axis as compared to another component.

All directional references (e.g., radial, axial, upper, lower, upward, downward, left, right, lateral, front, back, top, bottom, above, below, vertical, horizontal, clockwise, counterclockwise) are only used for identification purposes to aid the reader's understanding of the disclosure, and do not create limitations, particularly as to the position, orientation, or use thereof. Connection references (e.g., attached, coupled, connected, and joined) are to be construed broadly and can include intermediate members between a collection of elements and relative movement between elements unless otherwise indicated. As such, connection references do not necessarily infer that two elements are directly connected and in fixed relation to each other.

As used herein, the term "electrically insulative", "insulator", or "insulation" refers to a material that exhibits a low electrical conductivity (for example, less than about 10⁻⁸ siemens per meter (S/m)). Unless stated otherwise, as used herein, the term "insulation" or "insulative" refers to electrical insulation or electrically insulative properties. For example, the term "insulation" refers to electrical insulation.

As used herein, the term "conductivity" refers to a property of a material that allows a flow of charge or electric current therethrough. Also as used herein, the term "electrical conductor" refers to a material that exhibits a relatively high electrical conductivity (for example, greater than about 10⁴ S/m). Unless stated otherwise, as used herein, the term "conductive" refers to electrical conductivity, and the term "conductor" refers to an electrical conductor.

As used herein, the term "semi-conductive" refers to a property of a material having an electrical conductivity value falling between that of a conductor, and an insulator (for example, less than about 10⁻⁷ S/m). Also as used herein the term "semi-conductor" refers to a semi-conductive material.

As used herein the term "resistance", "resistivity", or "electrical resistance" refers to a property of a material, layer, or element indicative of an opposition to the movement of electrons across or through the material, layer, or element. Unless otherwise indicated, the terms "resistance" and "resistivity" refer to an electrical property of a material.

As used herein, the term "ohms per square" (ohms/sq) refers to a unit of an electrical measurement of surface resistivity across any given square area of surface of a material.

Aspects of the disclosure described herein are directed to an electrical machine, having a rotor arranged to rotate with respect to a stator. For the purposes of illustration, exemplary aspects will be described herein in the form of an electrical machine, specifically a generator, for a gas turbine engine and having a rotor. It will be appreciated however, that the electrical machine can be in the form of a generator, a motor, a permanent magnet generator (PMG), or a starter/generator (S/G), and the like, in non-limiting examples. It will be further understood, however, that aspects of the disclosure described herein are not so limited and can have general applicability within other electrical machines or systems. For example, the disclosure can have applicability for systems in other engines or vehicles, and may be used to provide benefits in industrial, commercial, and residential applications.

For example, electrical machines, such as conventional wound-rotor generators, are a major source of electrical energy for industrial and commercial applications. They are commonly used to convert mechanical power output of steam turbines, gas turbines, reciprocating engines and hydro-turbines into electrical power. Typically, these electrical machines include a central rotatable assembly or "rotor" that is circumscribed by a stationary assembly or "stator". A small air gap separates the rotor and stator. The rotor can include a rotatable element defining a central rotational axis and defining a periphery. The rotor typically includes a rotatable shaft and a rotor core having one or more sets of conductive rotor windings. The rotor windings can be wound about the periphery. The rotor windings are typically axially wound around a set of posts or rotor teeth defining slots therebetween. The number of sets of rotor windings typically define the number of electrical phases of the electrical machine. A portion of the windings (e.g., an end turns portion) of conventional rotors typically extend past or overhang the rotor. The rotor winding end turns in some electrical machines are supported and/or covered by a housing, cover, or other structure.

In operation, the rotor of conventional electrical machines is driven to rotate by a source of rotation, such as a mechanical or electrical machine, which for some aircraft may be a gas turbine engine. The rotor is often rotated at relatively high revolutions per minute (rpm) (e.g., 20,000 -500,000 rpm). In many cases, the rotor can spin relative to the stator in response to an electrical current. The electrical current passing through the rotor and stator creates heat. For example, heat is generated in the rotor due to the flow of current through the windings, and changing magnetic fields present in the rotor, causing the temperature to rise in the rotor. Heat can also be caused by, for example, stator core losses due to hysteresis or eddy currents generated during operation. It is desirable to cool the rotor and stator to protect the electrical machine from damage and to increase the electrical machine power density to allow for more power from a smaller physically sized electrical motor.

Furthermore, due to the relatively linear relation between rotational speed and shaft power of an electrical machine, increasing the rated speed of a generator can boost the power density and efficiency of the generator. Accordingly, there is a growing demand for conventional electrical machines to operate at increasingly higher speeds. However, operation of conventional electrical machines at higher speeds can create more heat to be reduced or removed.

In some cases, the heat is removed by passing air currents across and through the motor. In other cases, oil or other liquid coolant is passed through the electrical motor in proximity to the stator. The liquid coolant typically flows through passages formed in the motor housing adjacent to the stator. In still other cases, coolant is passed through passages formed in the stator core. In some cases, the liquid coolant or oil is sprayed on the end turn portion of the rotor windings and stator windings that extend past or overhang the rotor or stator, respectively (i.e., at axial ends of the motor).

Additionally, conventional electrical machines (e.g., generators) can include a stator including a stator core having axially extending elongate slots defined therein, with one or more conductive stator windings disposed in the slots. Typically, the stator windings are impregnated with electrically insulative, thermally conductive varnish or resin to conduct heat from the windings. Such varnishes are typically temperature limited, rarely rated above 240C, in accordance with the International Electrotechnical Commission (IEC) standard IEC 60216-1, and soften as they approach their glass transition temperature, reducing their effectiveness. Additionally, traditional epoxies and varnishes have a maximum thermal conductivity of about 0.3 W/mK. Further, the presence of the varnish often occludes the slots, preventing direct conduction cooling with a cooling fluid. Additionally, the varnish presents a risk of oil contamination for conventional electrical machines having wet cavity cooling systems.

Further, conventional electrical machines typically employ additional electrically insulative elements such as flexible sleeves, slot liners, wedges, and so called "top sticks" disposed in the slots to fill any voids within the slot not filled by windings or insulation. These insulative elements can reduce vibration of the windings within the slot and enhance thermal transfer of heat from the windings. In some cases, additional thermally conductive varnish or resin can be added to the slots to fill any remaining voids. Fabrication methods for such electrical machines can thus be complex, require multiple parts, and be costly.

Aspects as disclosed herein relate to electrical machines having improved power density and/or temperature ratings over conventional electrical machines with lower assembly costs. Aspects as disclosed herein can provide an improved electrical machine and method for insulating portions of an electrical machine that overcomes the above noted shortcomings of conventional approaches, and can provide improved operational performance and ratings.

For example, aspects as disclosed herein can eliminate the need for varnish or resin impregnation of the windings and other slot insulation, as well as sleeves, slot liners, wedges, top sticks through the use of a rigid monolithic or unitary support block which fixes the windings securely in place. Additionally, the support block can provide improved thermal, dielectric, and mechanical performance over conventional techniques, with simpler, lower cost manufacturing. Furthermore, by eliminating the need for varnish or other insulating resins, aspects as disclosed herein can readily enable oil cooling of the stator windings in electrical machines having wet cavity cooling systems, this arrangement is particularly advantageous when the electrical machine shares cooling oil with other system components such as the accessory gear box (AGB).

Aspects as disclosed herein are related to a component, such as a stator or a rotor, for an electrical machine, and methods of forming an electrical machine. The stator and/or rotor can include a respective set of electrically conductive windings, such as a respective set of stator windings or rotor windings. The component (e.g., the stator or rotor) can include an annular body defining a central bore having a central axis, and can include a set of circumferentially spaced radially extending teeth defining a set of slots extending axially along a periphery of the annular body. A support block having an elongate body defining a first bore extending axially therethrough is disposed within a respective slot, and an electrically conductive winding can be disposed to extend axially through the first bore.

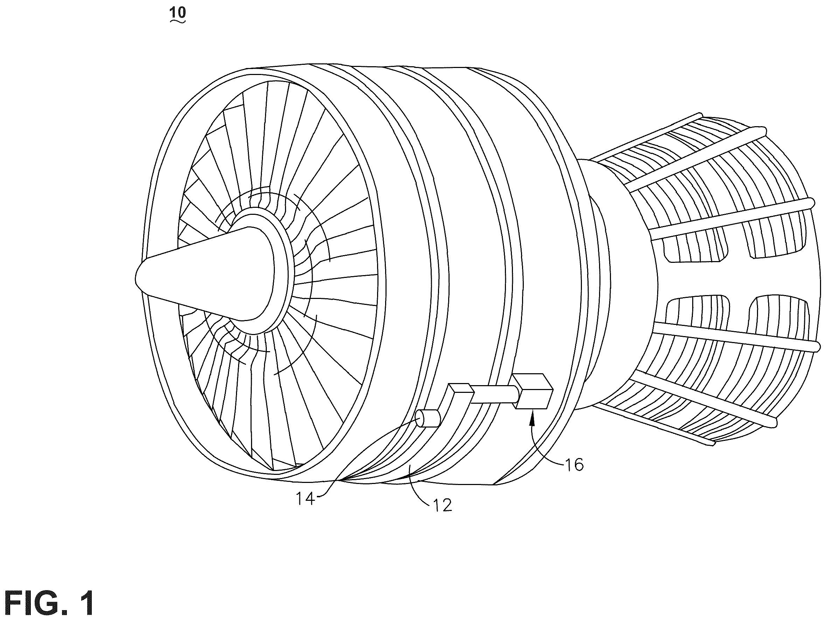

FIG. 1 illustrates a gas turbine engine 10 having an accessory gear box (AGB) 12 and an electrical machine or generator 14 according to an aspect of the disclosure. The gas turbine engine 10 can be a turbofan engine commonly used in modern commercial aviation. For example, the gas turbine engine 10 could include a turboprop or turboshaft. The AGB 12 can be coupled to a turbine shaft (not shown) of the gas turbine engine 10 by way of a mechanical power take off 16. The gas turbine engine 10 can be any suitable gas turbine engine used in modern aviation. For example, the gas turbine engine 10 can be any of a variety of other known gas turbine engines such as a turboprop or turboshaft. The type and specifics of the gas turbine engine 10 are not germane to the disclosure and will not be described further herein. While a generator 14 is shown and described, it will be appreciated that the generator 14, can be any electrical machine including, but not limited to, an electrical motor or starter/generator.

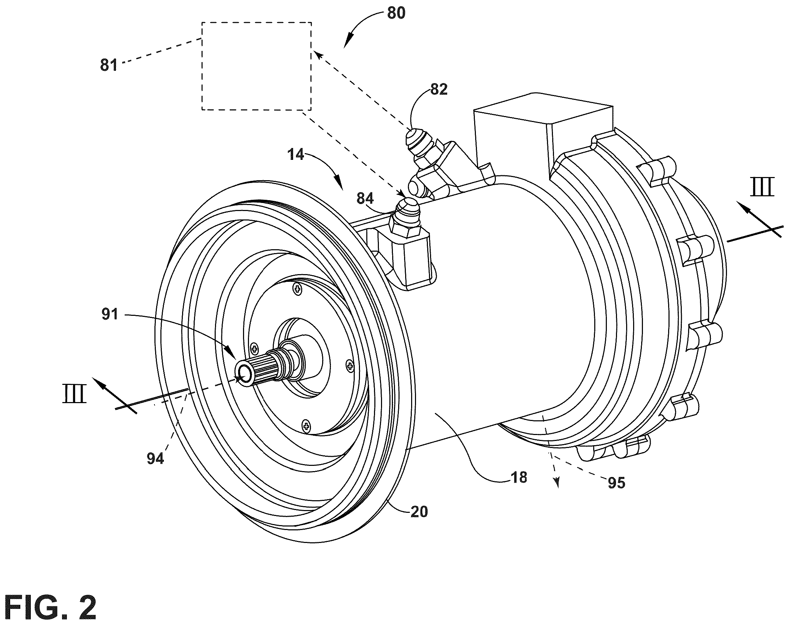

FIG. 2 illustrates a non-limiting example of the generator 14 and its housing 18 in accordance with aspects of the disclosure. The generator 14 can include a clamping interface 20, used to clamp the generator 14 to the AGB (not shown). A set of electrical connections can be provided on the exterior of the generator 14 to provide for the transfer of electrical power to and from the generator 14. The set of electrical connections can be further connected by cables to an electrical power distribution node of an aircraft having the gas turbine engine 10 to power various items on the aircraft, such as lights and seat-back monitors. The generator 14 can include a liquid cooling system 80 for cooling or dissipating heat generated by components of the generator 14 or by components proximate to the generator 14, one non-limiting example of which can be the gas turbine engine 10. For example, the generator 14 can include a liquid cooling system 80 using oil as a coolant.

The liquid cooling system 80 can include a cooling fluid inlet port 82 and a cooling fluid outlet port 84 for controlling the supply of coolant to the generator 14. In one non-limiting example, the cooling fluid inlet and outlet ports 82, 84 can be utilized for cooling at least a portion of a rotor or stator of the generator 14. The liquid cooling system can also include a second coolant outlet port 91, shown at a rotatable shaft or a drive shaft portion of the generator 14. Optionally, by way of non-limiting example, the liquid cooling system 80 can include a drive shaft coolant inlet port 94 or a generator coolant outlet port 95. The arrangement of inlet and outlet ports 82, 84, 91, 94, 95 depicted in FIG. 2 are only by way of example, and other inlet and outlet port arrangements are contemplated without departing from the scope of the disclosure. While not shown, aspects of the disclosure can further include other liquid cooling system 80 components, such as a liquid coolant reservoir or a coolant source 81 fluidly coupled with the cooling fluid inlet port 82, the drive shaft coolant inlet port 94, the cooling fluid outlet port 84, or the generator coolant outlet port 95, and a liquid coolant pump to forcibly supply the coolant through the ports 82, 84, 94, 95 or generator 14. As such, the liquid cooling system 80 and its respective components can constitute a fluid system with a set of fluid passages coupled to the coolant source 81.

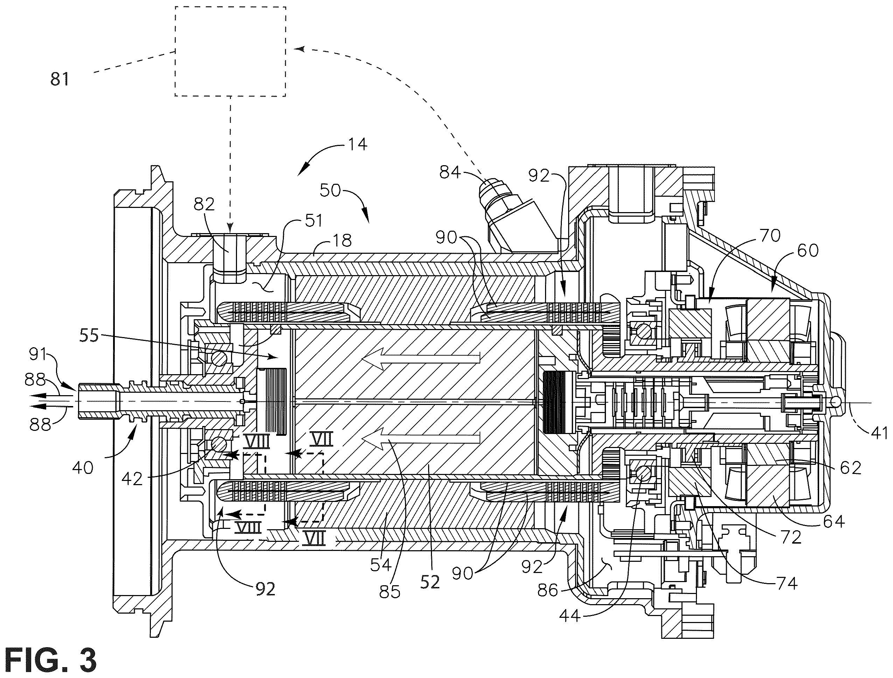

A non-limiting interior of the generator 14 is best seen in FIG. 3, which is a cross-sectional block diagram of the generator 14 shown in FIG. 2 taken along line III-III. A drive shaft 40 is located within the generator 14 and is the primary structure for supporting a variety of components. The drive shaft 40 can have a single diameter or one that can vary along its length. The drive shaft 40 is supported by spaced bearings 42 and 44 and configured to rotate about a rotational axis 41. Several of the elements of the generator 14 have a fixed component and a rotating component, with the fixed component fixed relative to the housing 18 and with the rotating component being provided on, or rotatably fixed relative to the drive shaft 40. Examples of these elements can include a main machine 50 or electrical machine, housed within a main machine cavity 51, an exciter 60, and a permanent magnet generator (PMG) 70. It will be appreciated that the electrical machine can specifically be a Pulse-Width Modulation (PWM) driven electrical machine, or any other suitable electrical machine such as, but not limited to, a 50/60Hz sine wave machine. In some aspects, the corresponding rotating component can comprise a main machine rotor 52, and the corresponding fixed component can comprise a main machine stator 54. In other aspects, the corresponding rotating component can comprise a main machine rotor 52, an exciter rotor 62, and a PMG rotor 72, respectively, and the corresponding fixed component can comprise a main machine stator 54, an exciter stator 64, and a PMG stator 74. The main machine rotor 52, exciter rotor 62, and PMG rotor 72 can be disposed on and co-rotate with the drive shaft 40. The fixed components can be mounted to any suitable part of the housing 18, and include the main machine stator 54, exciter stator 64, and PMG stator 74. Collectively, the fixed components define an interior through which the drive shaft 40 extends and rotates relative to.

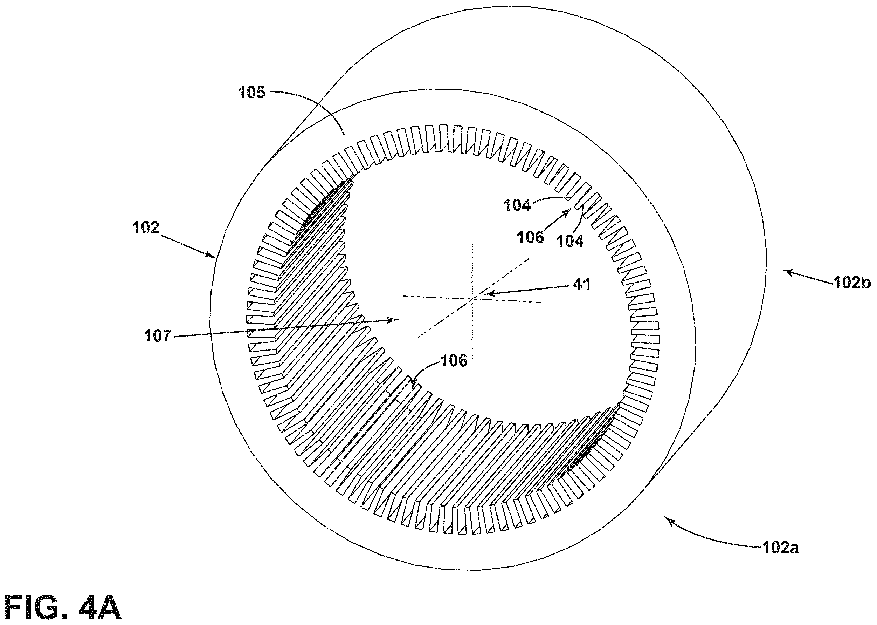

The stator 54 is disposed within the housing 18. For example, the housing 18 can have an annular shape that defines a central bore. The central bore can be elongated along the rotational axis 41. The stator 54 can define a set of slots (FIG. 4A) circumferentially disposed around the central bore 55. The main machine rotor 52 can be held or disposed within the central bore 55, and coupled to the drive shaft 40. As such, the main machine rotor 52 can rotate relative to the stator 54 around the rotational axis 41.

It will be understood that the main machine rotor 52, exciter rotor 62, and PMG rotor 72 can have a set of rotor poles, and that the main machine stator 54, exciter stator 64, and PMG stator 74 can have a set of stator poles. The set of rotor poles can generate a set of magnetic fields relative to the set of stator poles, such that the rotation of the rotor magnetic fields relative to the stator poles generate current in the respective stator components.

At least one of the rotor poles and stator poles can be formed by a core with a post and wire wound about the post to form a winding, with the winding having at least one end turn 92 or end winding. Aspects of the disclosure shown include at least one set of stator windings 90 arranged longitudinally along the housing 18, that is, in parallel with housing 18 and the rotational axis 41. The set of stator windings 90 can also include a set of end turns 92 extending axially beyond opposing ends of a longitudinal length of the stator 54.

The components of the generator 14 can be any combination of known generators. For example, the main machine 50 can be either a synchronous or asynchronous generator. In addition to the accessories shown in this aspect, there can be other components that need to be operated for particular applications. For example, in addition to the electromechanical accessories shown, there can be other accessories driven from the same drive shaft such as the liquid coolant pump, a fluid compressor, or a hydraulic pump.

As explained above, the generator 14 can be oil cooled and thus can include the liquid cooling system 80 fluidly coupled to the coolant source 81. The coolant from the coolant source 81 such as the cooling oil can be used to dissipate heat generated by the electrical and mechanical functions of the generator 14. The liquid cooling system 80 using oil can also provide for lubrication of the generator 14. In the illustrated aspects, the generator 14 can be a liquid cooled, liquid cooling system 80 including the cooling fluid inlet port 82 and the cooling fluid outlet port 84 for controlling the supply of the cooling fluid to the liquid cooling system 80. The liquid cooling system 80 can further include, for example, a cooling fluid reservoir 86 and various cooling passages. The drive shaft 40 can provide one or more channels or paths for coolant or fluid coolant flow 85 (shown schematically as arrows) for the main machine rotor 52, exciter rotor 62, and PMG rotor 72, as well as a rotor shaft cooling fluid outlet 88, such as the second coolant outlet port 91, wherein residual, unused, or unspent oil can be discharged from the drive shaft 40.

In non-limiting examples of the generator 14, the fluid coolant flow 85 can further be directed, exposed, sprayed, or otherwise deposited onto the set of stator windings 90, the set of end turns 92, or onto alternative or additional components. In this example, the fluid coolant flow 85 can flow from the drive shaft 40 radially outward toward the set of stator windings 90 or the set of end turns 92. In this sense, the fluid coolant flow 85 can cool the respective set of stator windings 90 or set of end turns 92 via the set of fluid passages coupled to the cooling fluid reservoir defined as the coolant source 81.

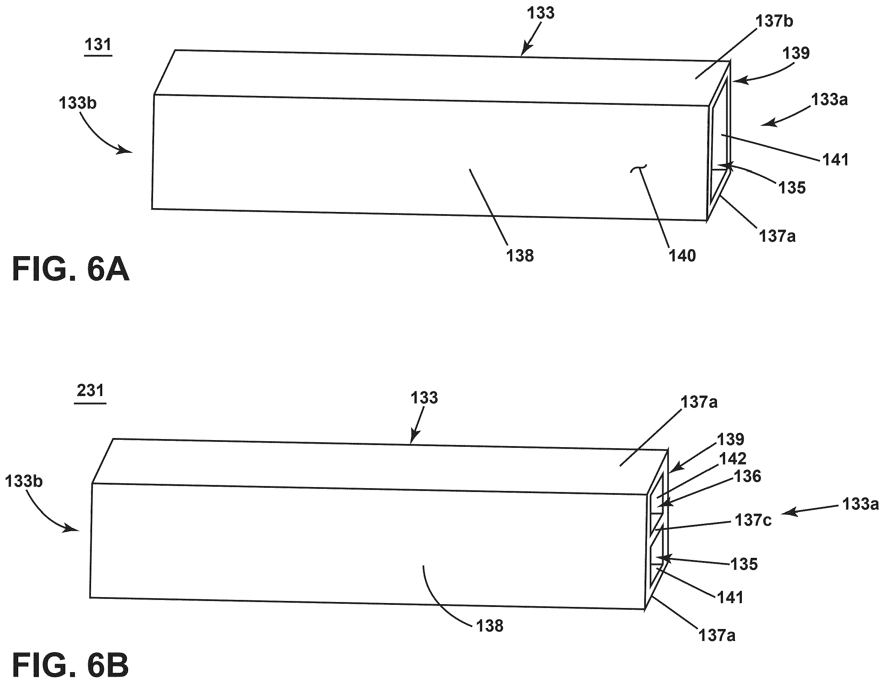

FIG. 4A further illustrates the main machine stator 54 for the main machine of the generator 14 of FIG. 3, with some parts such as the stator windings 90 (FIG. 3) and a support block (shown in FIGS. 6A, 6B) omitted for clarity. While the main machine stator 54 is shown and described, aspects of the disclosure can be applicable or utilized for any stator of an electrical machine, including, but not limited to the exciter stator 64, the PMG stator 74, or the like. In one non-limiting configuration, the main machine stator 54 can include a stator core 102. The stator core 102 can define an annular form and can be radially or concentrically arranged about the rotational axis 41 extending in an axial direction relative to the rotational axis 41.

The stator core 102 can include an annular stator body 105 defining a central bore 107 therethrough. The stator core 102 can extend axially from a first end 102a to an opposing second end 102b. The stator core 102 can further include a set of posts or teeth 104 extending from the annular stator body 105 radially inward toward the rotational axis 41. The set of teeth 104 can further define a set of slots 106, such as openings, gaps, spaces, or the like, between adjacent teeth 104.

While omitted from FIG. 4A for clarity, at least a subset of the slots 106 can be wound with a conductive wire or set of conductive wires to form the set of stator windings 90 (FIG. 3). In one non-limiting example, each of the slots 106 of the set of slots 106 can include or otherwise receive at least one stator winding 90. The at least one stator winding 90 can extend axially through at least a subset of the slots 106 from the first end 102a to the second end 102b. In non-limiting aspects, the stator winding 90 can include an in-slot portion within the slots 106 of the stator core 102 and an end turn 92 (FIG. 3) disposed outside of the slots 106. Additionally, while omitted from FIG. 4A for clarity, a respective electrically insulative support block is disposed within at least one of the slots 106, extending axially from the first end 102a to the second end 102b.

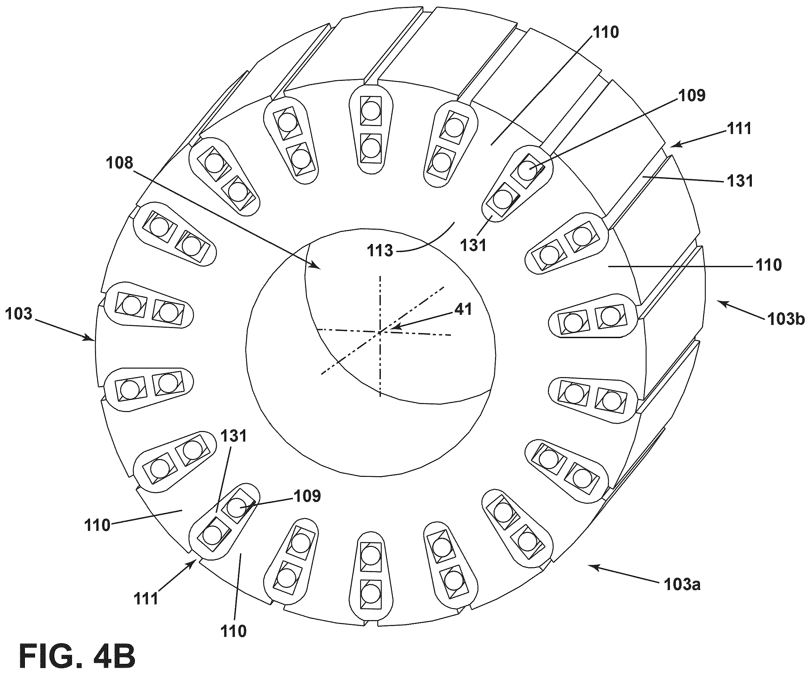

FIG. 4B illustrates the main machine rotor 52 for the main machine of the generator 14 of FIG. 3, having a set of rotor windings 109, with the end winding portions of the rotor windings omitted for clarity. While the main machine rotor 52 is shown and described, aspects of the disclosure can be applicable or utilized for any rotor of an electrical machine, including, but not limited to the exciter rotor 62, the PMG rotor 72, or the like. In one non-limiting configuration, the main machine rotor 52 can include a rotor core 103. The rotor core 103 can define an annular form and can be radially or concentrically arranged about the rotational axis 41. The rotor core 103 can include an annular rotor body 113 defining a central bore 108 therethrough. The rotor core 103 can extend axially from a first end 103a to an opposing second end 103b. The rotor core 103 can further include a set of posts or teeth 110 extending from the annular rotor body 113 radially outward with respect to the rotational axis 41. The set of teeth 110 can further define a set of slots 111, such as openings, gaps, spaces, or the like, between adjacent teeth 110.

At least a subset of the slots 111 can be wound with a conductive wire or set of conductive wires to form the set of rotor windings 109. In one non-limiting example, each of the slots 111 can include or otherwise receive at least one rotor winding 109. The at least one rotor winding 109 can extend axially through at least a subset of the slots 111 from the first end 103a to the second end 103b. In non-limiting aspects, the rotor winding 109 can include an in-slot portion within the slots 111 of the rotor core 103 and an end turn (not shown) disposed outside of the slots 111. Additionally, a respective electrically insulative support block 131 is shown as disposed within at least one of the slots 111, extending axially from the first end 103a to the second end 103b. While the rotor windings are depicted as being general cylindrical in shape, in other aspects the rotor windings 109 can have any desired shape or geometry.

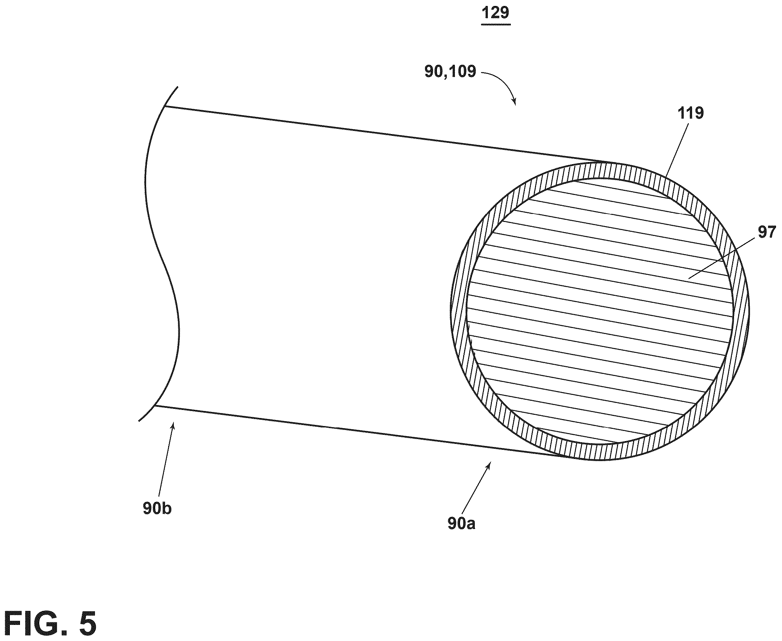

FIG. 5 depicts a cross-section of one non-limiting example of a portion of electrical machine winding 129 such as a stator winding 90 or a rotor winding 109. The electrical machine winding 129 can be one of a set of stator windings 90 or one of a set of rotor windings 109 or can collectively comprise the set of stator windings 90 or the set of rotor windings 109. The electrical machine winding 129 can comprise a conductor core 97 formed with an electrically conductive material including any desired metal alloy material such as alloys of nickel, copper, aluminum, silver, gold, and the like. The electrical machine winding 129 can extend longitudinally from a first end 90a to a second end 90b. In non-limiting aspects, the conductor core 97 can be circumferentially surrounded by an electrically insulative layer 119 formed by an electrically insulative material. For example, the electrically insulative layer 119 can be a sleeve or coating that circumferentially surrounds the conductor core 97. The electrically insulative layer 119 can include any suitable electrically insulating material placed to circumferentially surround the conductor core 97 including, but not limited to, an enamel coating, mica insulation or tape, polymer film, composite insulation, or the like. It is further contemplated that the electrically insulative layer 119 can be impregnated or supported by other materials such as, but not limited to, an epoxy resin or a fiberglass weave. For example, the electrically insulative layer 119 can include, without limitation, fluoropolymers such as polypropylene (PP), polyethylene (PE), polyvinyl chloride (PVC), polystyrene (PS), polyethylene terephthalate (PET), polycarbonate (PC), and the like. In other non-limiting aspects, the electrically insulative layer 119 can include, without limitation Perfluoroalkoxy (PFA), Fluorinated Ethylene Propylene (FEP), Ethylene Tetrafluoroethylene Copolymer (ETFE), Polytetrafluoroethylene (PTFE), Expanded Polytetrafluoroethylene (ePTFE), or the like.

While the electrical machine winding 129 shown in FIG. 5 is depicted with a single electrically insulative layer 119, other aspects are not so limited. It is contemplated that the stator winding 90 can omit the electrically insulative layer 119. It is further contemplated that in other aspects, the electrical machine winding 129 can optionally include other layers circumferentially surrounding the conductor core 97. For example, in non-limiting aspects, a conductive shield layer (not shown) can circumferentially surround the electrically insulative layer 119.

In various aspects, the electrically insulative layer 119 can include a set of insulation layers. For example, the electrically insulative layer 119 can include tape formed from polyetheretherketone (PEEK) material, and the tape can be wrapped around itself two or more times such that the electrically insulative layer 119 is any number of two or more electrically insulative layers 119 radially stacked on one-another from the conductor core 97, thus forming the set of electrically insulative layer 119. It is further contemplated that the electrically insulative layer 119 can be non-uniform along the conductor core 97. For example, the thickness of the electrically insulative layer 119 at the first end 90a can be larger than the thickness of the electrically insulative layer 119 at the second end 90b.

FIG. 6A depicts a perspective view of a non-limiting aspect of a support block 131. The support block 131 can have an elongate body 133 extending from a first end 133a to an opposing second end 133b. The body 133 can include a first bore 135 extending axially therethrough from the first end 133a to the second end 133b. The elongate body 133 is sized to securely fit within a respective slot 106. The body 133 can include a first sidewall 138, an opposing second sidewall 139 circumferentially spaced from the first sidewall 138, a radially inner wall 137a and an opposing radially outer wall 137b radially spaced from the radially inner wall 137a. In non-limiting aspects, the first sidewall 138, second sidewall 139, and the radially outer wall 137b can cooperatively define an exterior surface 140. In non-limiting aspects, the first sidewall 138, second sidewall 139, the radially inner wall 137a, and the radially outer wall 137b can cooperatively define a first interior surface 141. The first interior surface 141 can be configured to define the first bore 135. The first bore 135 is sized to receive at least one stator winding 90 (FIG. 4A) to extend axially therethrough.

While the example support block 131 of FIG. 6A is depicted as having a first bore 135 having a rectangular cross section, other aspects are not so limited, and the first bore 135 can have any desired cross-sectional shape or geometry. For example, in non-limiting aspects, the first bore 135 can have a cross section that can be generally circular, rectangular, triangular, or any other desired shape including an irregular cross section. It is contemplated that the cross section of the first bore 135 can have a shape that conforms or is complementary to a cross section of a respective stator winding 90 (FIG. 4A) disposed therein.

FIG. 6B depicts a perspective view of another exemplary aspect of an electrically insulative support block 231. The support block 231 depicted in FIG 6B is similar to the support block 131 of FIG 6A, and like parts are labelled with like reference numbers. One notable difference between the support block 231 of FIG. 6B and the support block 131 of FIG. 6A is that the elongate body 133 of the support block 231 can include the first bore 135 and a second bore 136 extending axially therethrough. For example, the support block 231 can include an interior wall 137c configured to at least partially define the first bore 135 and the second bore 136. The interior wall 137c can extend axially from the first end 133a to the second end 133b of the body 133, and can be coupled to and extend between the first sidewall 138 and the second sidewall 139. In non-limiting aspects, the first sidewall 138, second sidewall 139, the radially outer wall 137b, and interior wall 137c can cooperatively define the first interior surface 141. The first interior surface 141 can be configured to define the first bore 135. In non-limiting aspects, the first sidewall 138, second sidewall 139, the radially inner wall 137a, and the interior wall 137c can cooperatively define a second interior surface 142. The second interior surface 142 can be configured to define the second bore 136.

The first bore 135 is sized to receive at least one stator winding 90 (FIG. 5) therethrough, and the second bore 136 is sized to receive another at least one stator winding 90 therethrough. It will be appreciated that in still other aspects, the support block 231 can define any desired number of bores 135, 136 defined axially therethrough, and sized to receive any desired number of respective stator windings 90 (FIG. 5) extending axially therethrough.

While the example support block 231 of FIG. 6B is depicted as having the first bore 135 and the second bore 136, both having an identical cross section (e.g., rectangular) and a substantially equal size (e.g., cross-sectional area), other aspects are not so limited, and the first bore 135 and the second bore 136 can each have any desired respective cross-sectional shape or geometry, and can be identical, or different with respect to the other. Additionally, in other non-limiting aspects, the first bore 135 and the second bore 136 can have different cross-sectional areas, with respect to each other. For example, in non-limiting aspects the second bore 136 can have a cross section that can be generally circular, rectangular, triangular, or any other desired geometry including an irregular cross section, while the first bore 135 can have a different cross section, than the second bore 136. It is contemplated that the cross section of the second bore 136 can have a shape that conforms to a cross section of a respective stator winding 90 disposed therein.

With simultaneous reference to FIGS. 6A and 6B, in non-limiting aspects, the support block 131, 231 can be formed from a suitable electrically insulative material such as a polymer, for example, a polyetheretherketone (PEEK) material. In other aspects, the support block 131, 231 can be formed from, without limitation, fluoropolymers such as polypropylene (PP), polyethylene (PE), polyvinyl chloride (PVC), polystyrene (PS), polyethylene terephthalate (PET), polycarbonate (PC), and the like. In other non-limiting aspects, the support block 131, 231 can be formed from, without limitation Perfluoroalkoxy (PFA), Fluorinated Ethylene Propylene (FEP), Ethylene Tetrafluoroethylene Copolymer (ETFE), Polytetrafluoroethylene (PTFE), Expanded Polytetrafluoroethylene (ePTFE), or the like.

In other non-limiting aspects, the support block 131, 231 can be formed of an electrically conductive material. In some aspects, the electrically conductive material can be a magnetic material. In still other aspects, the support block 131, 231 can be formed as a laminated structure having layers of an electrically conductive material to reduce eddy currents during operation. In such aspects, the first interior surface 141, or the second interior surface 142, or both can be coated with an electrically insulative material (e.g., an electrically insulative powder coat) such that the first interior surface 141, or the second interior surface 142, or both is electrically insulative.

In other non-limiting aspects, the support block 131, 231 can be formed of a magnetic material. For example, the magnetic material can be, without limitation, iron, silicon steel (e.g., Fe6.5Si), Ni-Fe alloys, FeCo alloys, soft ferrites (e.g., MnZn ferrite, Ni-Zn ferrite), amorphous or nanocrystalline alloys/composites (Fe-based, Co-based), or the like having a relatively high magnetic permeability, for example, greater than 10 microhenries per meter (uH/m).

In non-limiting aspects, the support block 131, 231 can also be thermally conductive. For example, in some aspects the support block 131, 231 can be formed of a material having a thermal conductivity of about 0.65 W/mK. Furthermore, the support block 131, 231 can be formed of a material having a thermal rating greater than 180°C, in accordance with the International Electrotechnical Commission (IEC) standard IEC 60216-1. In some aspects, the support block 131, 231 can be formed of a material having a thermal rating greater than 240°C, in accordance with the IEC standard IEC 60216-1. In still other aspects, the support block 131, 231 can be formed of a material having a thermal rating greater than 280°C, in accordance with the IEC standard IEC 60216-1.

In some aspects, the support block 131, 231 can include, a polymer-based composite having an electrically insulative material including soft magnetic (e.g., easily magnetized or demagnetized when subjected to an external magnetic field, such as those having intrinsic coercivity less than 1000 Am-1) particles or powder dispersed therein. For example, the magnetic particles can be, without limitation, iron, silicon steel (e.g., Fe6.5Si), Ni-Fe alloys, FeCo alloys, soft ferrites (e.g., MnZn ferrite, Ni-Zn ferrite), amorphous or nanocrystalline alloys/composites (Fe-based, Co-based), or the like having a relatively high magnetic permeability. The morphology of the magnetic particles can include but are not limited to spherical, irregular, flaky, fiber, and the like. For example, the support block 131, 231 can have a permeability greater than 10 uH/m. It is contemplated that the amount and size of the magnetic particles dispersed in the polymer-based composite material can be varied as necessary to achieve a desired or predetermined performance characteristic (e.g., magnetic shimming).

In other non-limiting aspects, the support block 131, 231 can be formed of a dual-phase magnetic material (e.g., having different magnetic permeability levels in certain areas, to reduce flux leakage during operation. For example, the support block 131, 231 can be formed using laminated sheets of silicon steel, using ion-plasma nitriding in a glow discharge to create dual-phase magnetic properties via nitrogen-induced phase transformation from ferritic (magnetic) to austenite (non-magnetic) in selected or predetermined areas.

The support block 131, 231 can be received within and extend axially through a respective slot 106, 111 (FIGS. 4A, 4B). For example, the first sidewall 138 and the second sidewall 139 can be arranged to face a respective tooth 104 of the set of teeth 104 (FIG. 5).

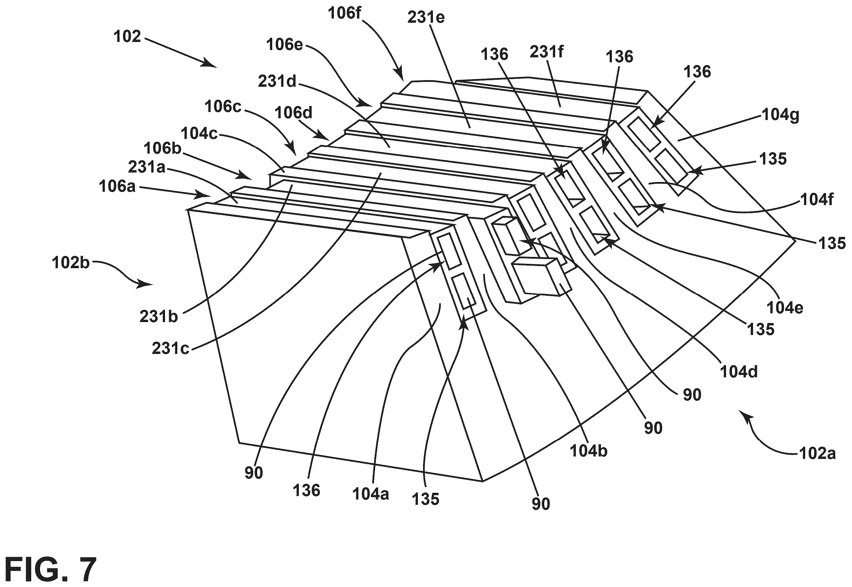

FIG. 7 illustrates a perspective view of a portion of the stator core 102 of FIG. 4A. For ease of description and understanding, the illustrated portion depicts seven teeth 104 (designated 104a-104g), defining six slots 106 (designated 106a-106f) respectively therebetween, into which a respective support block 231 (designated 231a-231f) is received. Each support block 231a-231f includes the first bore 135 and the second bore 136. In the particular instance illustrated, a respective stator winding 90 is received into a respective first bore 135 and a respective second bore 136 of the support blocks 231a, 231b, 231c and 231f, with no stator winding 90 received within the respective first bore 135 or respective second bore 136 of the support blocks 231d and 231e. The end turns 92 (FIG. 3) are omitted for clarity, however the respective stator windings 90 disposed in the first bore 135 and the second bore 136 of the support block 231b are illustrated as extending axially therefrom.

The stator core 102 extends axially from the first end 102a to the opposing second end 102b. The stator core 102 includes the set of teeth 104 extending from the annular stator body 105 radially inward toward the rotational axis 41 (FIG. 4A), the teeth 104 extend axially from the first end 102a to the second end 102b. The set of teeth 104 are spaced from each other further define the set of slots 106 between adjacent teeth 104, the slots 106 extending axially from the first end 102a to the second end 102b. A respective support block 231 can be disposed within each slot 106, extending axially from the first end 102a to the second end 102b. The support blocks 131 can be snugly received between a respective pair of immediately adjacent teeth 104. For example, in some aspects, the support block 231 can have a friction fit relationship with the respective pair of immediately adjacent teeth 104. In other aspects, the support block 231 can have a press fit or interference fit relationship with the respective pair of immediately adjacent teeth 104 to prevent relative movement of the support block 231 and the stator core 102. In still other instances the support block 231 and the respective pair of immediately adjacent teeth 104 can define mating complementary features (not shown) configured to retain the support block 231 and prevent a radial movement of the support block 231.

At least a subset of the support blocks 231 can include or otherwise receive at least one respective stator winding 90 therethrough which can extend axially from the first end 102a to the second end 102b. The support blocks 231 can have a friction fit, press fit or interference fit relationship with the respective stator winding 90 disposed in the first bore 135 and the second bore 136 of the respective support block 231.

It is contemplated that there can be any number of respective stator windings 90 received within the respective support blocks 231. It is further contemplated that one or more the stator windings 90, within a respective support block 231 can be of a single electrical phase, or different sets or groupings of stator windings 90 within the respective support block 231 can be associated with different electrical phases. For example, in terms of the stator windings 90, there can be stator windings 90 having two or three different electrical phases within a single respective support block 231. While the stator windings 90 are depicted as having a generally rectangular cross-section, in other aspects the stator windings can have any desired shape or geometry.

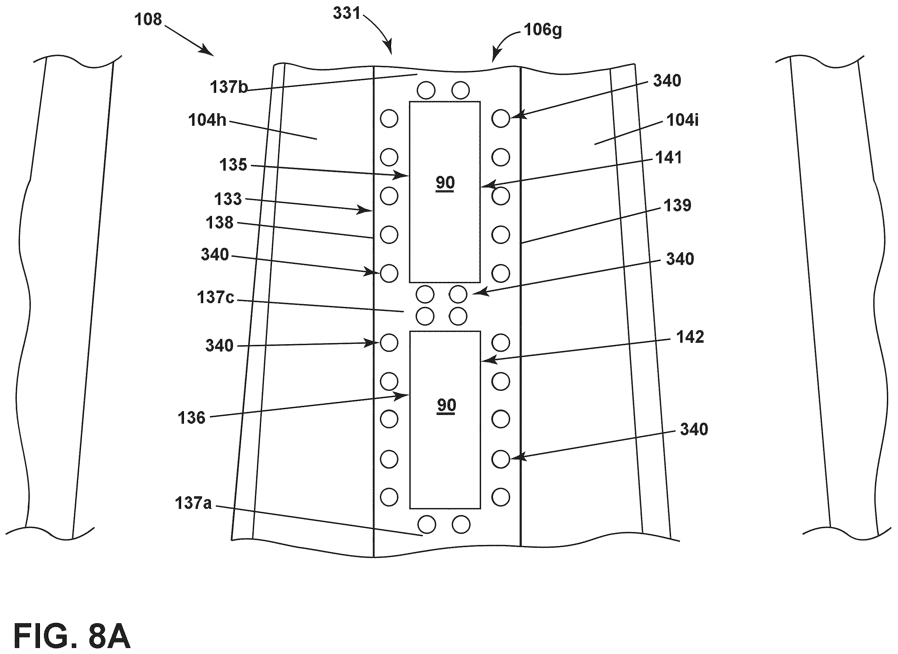

FIG. 8A illustrates a section view of another portion of a stator core 102 depicting another non-limiting aspect of a support block 331 disposed in a slot 106g therein with the end turns omitted for clarity. The portion of the stator core 102 depicted in FIG. 8A is similar to the portion of the stator core 102 depicted in FIG. 7, and like parts are labelled with like reference numbers. One notable difference between the portion of the stator core 102 of FIG. 8A and the portion of the stator core 102 of FIG. 7 is that FIG. 8A depicts only a single slot 106g defined by a pair of immediately adjacent teeth 104h, 104i, and the support block 331 defines a set of cooling channels 340 extending axially therethrough.

The support block 331 is similar to the support blocks 131, 231 and can include the body 133 and the interior wall 137c configured to at least partially define the first bore 135 and the second bore 136. The interior wall 137c can extend between the first sidewall 138 and the second sidewall 139. The first bore 135 is sized to receive at least one stator winding 90 therethrough, and the second bore 136 is sized to receive another at least one stator winding 90 therethrough. It will be appreciated that in still other aspects, the support block 331 can define any desired number of bores 135, 136 defined axially therethrough, and sized to receive any desired number of respective stator windings 90 extending axially therethrough.

In non-limiting aspects, the first sidewall 138, second sidewall 139, the radially outer wall 137b, and interior wall 137c can cooperatively define the first interior surface 141. The first interior surface 141 can be configured to define the first bore 135. In non-limiting aspects, the first sidewall 138, second sidewall 139, the radially inner wall 137a, and the interior wall 137c can cooperatively define the second interior surface 142. The second interior surface 142 can be configured to define the second bore 136.

The set of cooling channels 340 can be defined through the first sidewall 138, second sidewall 139, the radially outer wall 137b, the radially inner wall 137a, the interior wall 137c, and combinations thereof. The set of cooling channels 340 can extend from the first end 133a to the second end 133b (FIG. 6B). The set of cooling channels 340 can be spaced from each other to circumferentially surround the first bore 135, or the second bore 136, or both. The set of cooling channels 340 can be coupled in fluid communication with the liquid cooling system 80 to receive the fluid coolant flow 85 (both shown in FIG. 3) therethrough.

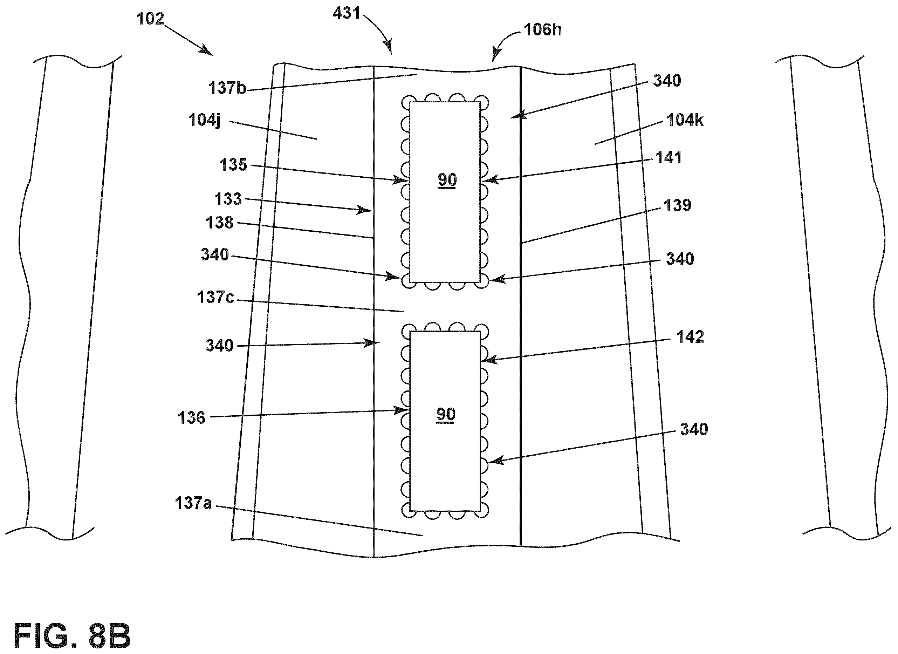

FIG. 8B illustrates a section view of another portion of a stator core 102 having another non-limiting aspect of a support block 431 disposed therein with the end turns omitted for clarity. FIG. 8B depicts only a single slot 106h defined by a pair of immediately adjacent teeth 104j, 104k, and the support block 431 defines a set of cooling channels 340 extending axially therethrough.

The support block 431 depicted in FIG. 8B is similar to the support block 331 depicted in FIG. 8A, and like parts are labelled with like reference numbers. One difference between the support block 431 depicted in FIG. 8B and the support block 331 depicted in FIG. 8A is that the support block 431 of FIG. 8B depicts the set of cooling channels 340 formed as a set of grooves or slots extending axially along first interior surface 141, or the second interior surface 142, or both. The set of cooling channels 340 can extend from the first end 133a to the second end 133b (FIG. 6B). The set of cooling channels 340 can be arranged in fluid communication with the respective stator windings 90 disposed in the first bore 135 or the second bore 136, or both. The set of cooling channels 340 can be fluidly coupled with the liquid cooling system 80 to receive the fluid coolant flow 85 (both shown in FIG. 3) therethrough. As such, in non-limiting aspects, the fluid coolant flow 85 can be in contact with the stator windings 90 while disposed in the cooling channels 340 to maximize a thermal transfer of heat from the stator windings 90 to the fluid coolant flow 85.

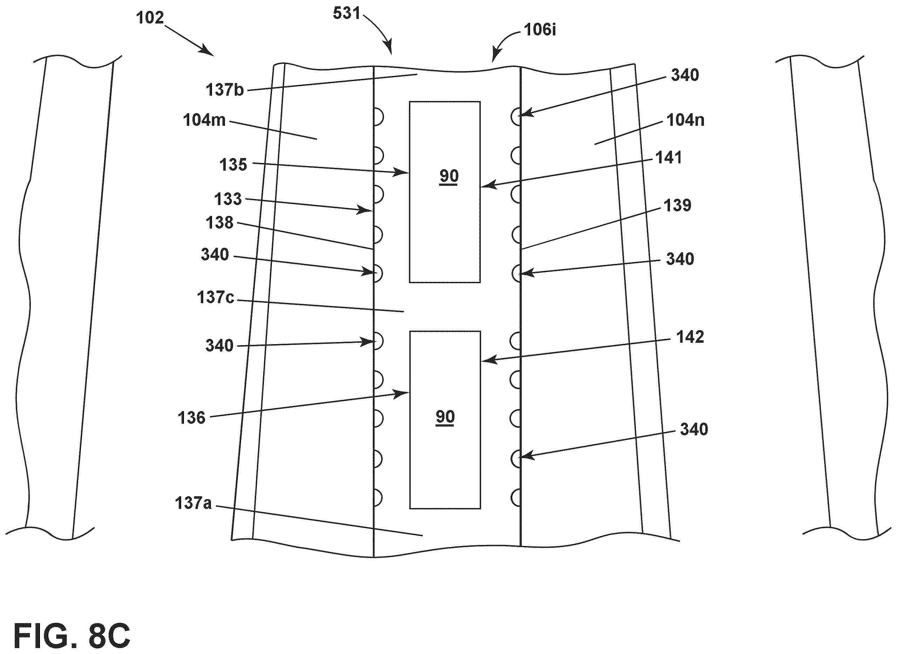

FIG. 8C illustrates a section view of another portion of a stator core 102 having another non-limiting aspect of a support block 531 disposed therein with the end turns omitted for clarity. FIG. 8C depicts only a single slot 106i defined by a pair of immediately adjacent teeth 104m, 104n, and the support block 531 defines a set of cooling channels 340 extending axially therethrough. The support block 531 depicted in FIG. 8C is similar to the support block 331 depicted in FIG. 8A, and like parts are labelled with like reference numbers. One notable difference between the support block 531 depicted in FIG. 8C and the support block 331 depicted in FIG. 8A is that the support block 531 of FIG. 8C depicts the set of cooling channels 340 formed as a set of grooves or slots extending axially along the first sidewall 138, the second sidewall 139, or both.

The set of cooling channels 340 can extend from the first end 133a to the second end 133b (FIG. 6B). The set of cooling channels 340 can be arranged in fluid communication with the respective stator teeth 104h, 104i defining the slot 106g. The set of cooling channels 340 can be further fluidly coupled with the liquid cooling system 80 to receive the fluid coolant flow 85 (both shown in FIG. 3) therethrough. As such, in non-limiting aspects, the fluid coolant flow 85 can be in contact with the stator core 102 (e.g., the teeth 104h, 104i) while disposed in the cooling channels 340 to maximize a thermal transfer of heat from the stator core to the fluid coolant flow 85.

It will be appreciated that the positions or locations of the cooling channels 340 of the example support blocks 331, 431, 531 of FIGS. 8A-8C can be varied or mixed as desired to form any number of different support block 331, 431, 531 configurations without departing from the scope of the disclosure. Additionally, while the example support block 331, 431, 531 of FIGS. 8A-8C is depicted as having the first bore 135 and the second bore 136, both having identical cross sections (e.g., rectangular) and a substantially equal size (e.g., cross-sectional area), other aspects are not so limited, and the first bore 135 and the second bore 136 can each have any desired cross-sectional shape or geometry, and can be identical, or different with respect to the other. Additionally, in other non-limiting aspects, the first bore 135 and the second bore 136 can have different cross-sectional areas, relative each other. For example, in non-limiting aspects the second bore 136 can have a cross section that can be generally circular, rectangular, triangular, or any other desired geometry including an irregular cross section, while the first bore 135 can have a different cross section, than the second bore 136. It is contemplated that the cross section of the second bore 136 can have a shape that conforms to a cross section of a respective stator winding 90 disposed therein.

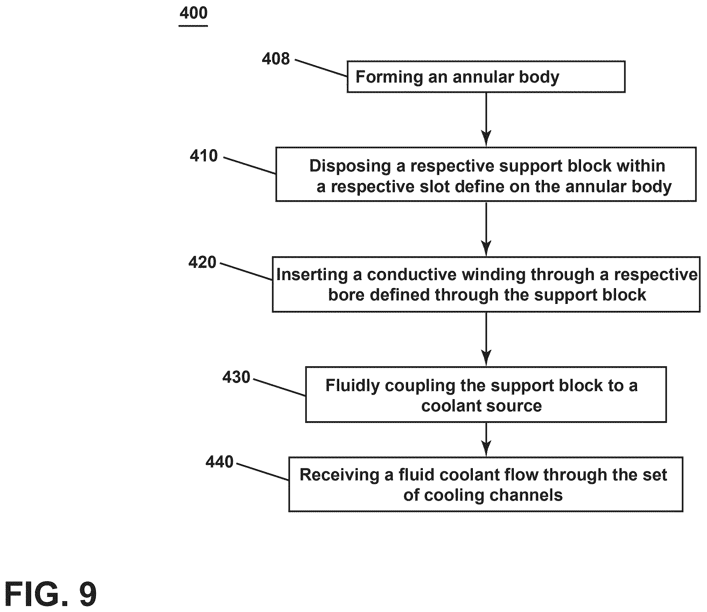

FIG. 9 is a non-limiting example of a method 400 of forming a component of an electrical machine such as the stator core 102 of FIG. 4A, or the rotor core of FIG.4B, as described herein. Although described in terms of the stator core 102, it will be appreciated that the methods described can be applied to any stator core or rotor core, or both, without departing from the scope of the disclosure herein.

The method 400 can begin with forming an annular body, such as the annular stator body 105 or the annular rotor body 113 at step 408. The annular stator body 105 or the annular rotor body 113 can be formed through any suitable manufacturing method and include any suitable material, such as, but not limited to, steel. The annular stator body 105 can define a central bore 107 therethrough. The central bore 107 can be sized to receive the annular rotor body 113 therein. The annular stator body 105 can extend axially from a first end 102a to an opposing second end 102b. The annular stator body 105 can include a set of posts or teeth 104 extending from the annular stator body 105 radially inward toward the rotational axis 41. The set of teeth 104 can further define a set of slots 106, such as openings, gaps, spaces, or the like, between adjacent teeth 104. In other aspects, the annular rotor body 113 can extend axially from a first end 103a to an opposing second end 103b. The annular rotor body 113 can extend axially from a first end 103a to an opposing second end 103b. The annular rotor body 113 can include a set of posts or teeth 110 extending from the annular rotor body 113 radially outward from the rotational axis 41. The set of teeth 110 can further define a set of slots 111, such as openings, gaps, spaces, or the like, between adjacent teeth 110.

The method 400 can include disposing a respective support block 131, 231, 331, 431, 531 within a respective slot 106, 111 at step 410. In non-limiting aspects, the disposing the respective support block 131, 231, 331, 431, 531 within a respective slot 106, 111 can include a press-fit operation. The support block 131, 231, 331, 431, 531 can have an elongate body 133 extending from a first end 133a to an opposing second end 133b. The body 133 can define at least a first bore 135 extending axially therethrough from the first end 133a to the second end 133b. The elongate body 133 can be sized to securely fit within a respective slot 106. The support block 131, 231, 331, 431, 531 can extend axially through a respective slot 106. In non-limiting aspects, the support block 131, 231, 331, 431, 531 can be formed from a suitable electrically insulative material such as a polymer, for example, a polyetheretherketone (PEEK) material, or an elastomer. In other aspects, the support block 131 can be formed from, without limitation, fluoropolymers such as polypropylene (PP), polyethylene (PE), polyvinyl chloride (PVC), polystyrene (PS), polyethylene terephthalate (PET), polycarbonate (PC), and the like. In other non-limiting aspects, the support block 131, 231, 331, 431, 531 can be formed from, without limitation, Perfluoroalkoxy (PFA), Fluorinated Ethylene Propylene (FEP), Ethylene Tetrafluoroethylene Copolymer (ETFE), Polytetrafluoroethylene (PTFE), Expanded Polytetrafluoroethylene (ePTFE), or the like. In other non-limiting aspects, the support block 131, 231, 331, 431, 531 can be formed of an electrically conductive material. In such aspects, the first interior surface 141 or the second interior surface 142, or both can be coated with an electrically insulative material (e.g., an electrically insulative powder coat) such that the first interior surface 141 or the second interior surface 142, or both, is electrically insulative.

In other non-limiting aspects, the support block 131, 231, 331, 431, 531 can be formed of an electrically conductive material. In such aspects, the support block 131, 231 can be formed as a laminated structure having layers of an electrically conductive material to reduce eddy currents during operation. In such aspects, the first interior surface 141 or the second interior surface 142, or both can be coated with an electrically insulative material (e.g., an electrically insulative powder coat) such that at least the first interior surface 141 or the second interior surface 142, or both, is electrically insulative.

In some aspects, the support block 131, 231, 331, 431, 531 can include, a polymer-based composite having soft magnetic particles or powder. In non-limiting aspects, the support block 131, 231, 331, 431, 531 can include, without limitation, iron, silicon steel (e.g., iron silicide (FeSi)), nickel-iron (Ni-Fe) alloys, iron pentacarbonyl (FeCo) alloys, soft ferrites (e.g., manganese ferrites such as manganese zinc (MnZn) ferrite, nickel-zinc (Ni-Zn) ferrite), amorphous or nanocrystalline alloys/composites (e.g., iron (Fe) or cobalt (Co)) based alloys or composites), or the like having a relatively high magnetic permeability infused or otherwise dispersed therein. The magnetic particles can be, without limitation, iron, silicon steel (e.g., Fe6.5Si), Ni-Fe alloys, FeCo alloys, soft ferrites (e.g., MnZn ferrite, Ni-Zn ferrite), amorphous or nanocrystalline alloys/composites (Fe-based, Co-based), or the like having a relatively high magnetic permeability. The morphology of the magnetic particles can include but are not limited to spherical, irregular, flaky, fiber, and the like. It is contemplated that the amount and size of the magnetic particles dispersed in the polymer-based composite material can be varied as necessary to achieve a desired or predetermined performance characteristic (e.g., magnetic shimming).

In other non-limiting aspects, the support block 131, 231, 331, 431, 531 can be formed of a dual-phase magnetic material (e.g., having different magnetic permeability levels in certain areas, to reduce flux leakage during operation.

In some aspects, the support block 131, 231, 331, 431, 531 can define the first bore 135 and a second bore 136 extending axially therethrough. The first bore 135 is sized to receive at least one electrically conductive winding such as a stator winding 90 or a rotor winding 109 therethrough, and the second bore 136 is sized to receive another at least one electrically conductive winding such as another stator winding 90 or rotor winding 109 to extend therethrough. It will be appreciated that in still other aspects, the support block 131, 231, 331, 431, 531 can define any desired number of bores defined to extend axially therethrough, and sized to receive any desired number of respective electrically conductive windings such as respective stator windings 90 or rotor windings 109 to extend axially therethrough.

The method can include at step 420 inserting or otherwise disposing an electrically conductive winding such as a stator winding 90 or rotor winding 109 through at least one respective bore 135, 136 defined through at least one respective support block 131, 231, 331, 431, 531. The electrically conductive winding, such as the stator winding 90 or rotor winding 109 can include a conductor core 97. The conductor core 97, can be formed through any suitable manufacturing method and include any suitable conductive material, such as, but not limited to, copper. The conductor core 97, can be overlaid with the electrically insulative layer 119. For example, the electrically insulative layer 119 can be a sleeve arranged to circumferentially surround or covers the conductor core 97.

In non-limiting aspects, the method 400 can include various other steps. For example, the method can include at step 430, fluidly coupling the support block to a coolant source 81. The method 400 can still further include providing at step 440, receiving a fluid coolant flow 85 through the set of cooling channels 340.

The sequence depicted is for illustrative purposes only and is not meant to limit the method 400 in any way as it is understood that the portions of the method can proceed in a different logical order, additional or intervening portions can be included, or described portions of the method can be divided into multiple portions, or described portions of the method can be omitted without detracting from the described method.

It is contemplated that aspects of this disclosure can be advantageous for use over conventional electrical winding assemblies. The rigid monolithic nature of the support block and the ability to utilize materials with enhanced thermal conductivity compared to traditional epoxies and varnishes to enable enhanced cooling and increased thermal ratings over conventional arrangements. Aspects as disclosed herein can advantageously allow direct in-slot cooling with no or minimal exposure of the oil to conventional varnish materials, enabling sharing of the cooling oil or medium with the accessory gear box. The increased thermal ratings and enhanced cooling (e.g., improved thermal conductivity between stator windings and the stator core) can further enable an increased power density for electrical machines. Additionally, aspects as disclosed herein can eliminate the need for slot liners, top sticks, wedges and varnish, used in conventional electrical machines, thereby improving manufacturability and reducing cost.

To the extent not already described, the different features and structures of the various aspects can be used in combination with each other as desired. That one feature cannot be illustrated in all of the aspects is not meant to be construed that it cannot be, but is done for brevity of description. Thus, the various features of the different aspects can be mixed and matched as desired to form new aspects, whether or not the new aspects are expressly described. Combinations or permutations of features described herein are covered by this disclosure.

This written description uses examples to disclose aspects of the disclosure, including the best mode, and also to enable any person skilled in the art to practice aspects of the disclosure, including making and using any devices or systems and performing any incorporated methods. The patentable scope of the disclosure is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

Further aspects of the present disclosure are provided by the subject matter of the following clauses:

A component for an electrical machine, comprising: an annular body defining a central bore having a central axis, the annular body including a set of circumferentially spaced radially extending teeth defining a set of slots between adjacent teeth, the slots extending axially along a periphery of the annular body; a support block having an elongate body defining a first bore extending axially therethrough disposed within a respective slot; and a first electrically conductive winding extending axially through the first bore.

The component for an electrical machine of any preceding clause, wherein the component is one of a stator or a rotor.

The component for an electrical machine of any preceding clause, wherein the electrically conductive winding includes a conductor core circumferentially surrounded by an electrically insulative layer.

The component for an electrical machine of any preceding clause, wherein the support block is formed from one of an electrically insulative material or an electrically conductive material.

The component for an electrical machine of any preceding clause, wherein the electrically conductive material is magnetic.

The component for an electrical machine of any preceding clause, wherein the support block is formed of a dual-phase magnetic material.

The component for an electrical machine of any preceding clause, wherein the support block is a laminated structure comprising layers of an electrically conductive material.

The component for an electrical machine of any preceding clause, wherein the first bore is defined by a first surface, further including an electrically insulative material deposited the first surface.

The component for an electrical machine of any preceding clause, wherein, the support block is formed from a polymer-based composite including soft magnetic particles.

The component for an electrical machine of any preceding clause, wherein support block includes a set of cooling channels defined therethrough.

The component for an electrical machine of any preceding clause, wherein the set of cooling channels are fluidly coupled with the electrically conductive winding.

The component for an electrical machine of any preceding clause, wherein the cooling channels are fluidly coupled with at least one tooth.

The component for an electrical machine of any preceding clause, wherein the cooling channels are spaced between the electrically conductive winding and a respective tooth.

The component for an electrical machine of any preceding clause, wherein the cooling channels are fluidly coupled to a coolant source.

The component for an electrical machine of any preceding clause, wherein the support block further defines a second bore extending axially therethrough, having a second electrically conductive winding extending axially therethrough.

The component for an electrical machine of any preceding clause, wherein the first electrically conductive winding and the second electrically conductive winding are associated with different electrical phases with respect to each other.

A method of forming an electrical machine, the method comprising: forming an annular body; disposing a respective support block within a respective slot defined on the annular body; and inserting an electrically conductive winding through a respective bore defined through the support block.

The method of any preceding clause, further comprising fluidly coupling the support block to a coolant source.

The method of any preceding clause, further comprising receiving a fluid coolant flow through a cooling channel defined through the support block.

The method of any preceding clause, wherein the support block is formed from one of an electrically insulative material or an electrically conductive material.

The method of any preceding clause, wherein the electrically conductive material is magnetic.

The method of any preceding clause, wherein the support block is formed of a dual-phase magnetic material.

The method of any preceding clause, wherein the support block is a laminated structure comprising layers of an electrically conductive material.

The method of any preceding clause, wherein the first bore is defined by a first surface, further including an electrically insulative material deposited the first surface.

The method of any preceding clause, wherein, the support block is formed from a polymer-based composite including soft magnetic particles.

The method of any preceding clause, wherein support block includes a set of cooling channels defined therethrough.

The method of any preceding clause, wherein the set of cooling channels are fluidly coupled with the electrically conductive winding.

The method of any preceding clause, wherein the cooling channels are fluidly coupled with at least one tooth.

The method of any preceding clause, wherein the cooling channels are spaced between the electrically conductive winding and a respective tooth.

The method of any preceding clause, wherein the cooling channels are fluidly coupled to a coolant source.

The method of any preceding clause, wherein the support block further defines a second bore extending axially therethrough, having a second electrically conductive winding extending axially therethrough.

The method of any preceding clause, wherein the first electrically conductive winding and the second electrically conductive winding are associated with different electrical phases with respect to each other.

An electrical machine comprising: a housing; and a component disposed within the housing, the component comprising: an annular body defining a central bore having a central axis, the annular body including a set of circumferentially spaced radially extending teeth defining a set of slots between adjacent teeth, the slots extending axially along a periphery of the annular body; a support block having an elongate body defining a first bore extending axially therethrough disposed within a respective slot; and a first electrically conductive winding extending axially through the first bore.

The electrical machine of any preceding clause, wherein the component is one of a stator or a rotor.

The electrical machine of any preceding clause, wherein the electrically conductive winding includes a conductor core circumferentially surrounded by an electrically insulative layer.

The electrical machine of any preceding clause, wherein the support block is formed from one of an electrically insulative material or an electrically conductive material.

The electrical machine of any preceding clause, wherein the electrically conductive material is magnetic.

The electrical machine of any preceding clause, wherein the support block is formed of a dual-phase magnetic material.

The electrical machine of any preceding clause, wherein the support block is a laminated structure comprising layers of an electrically conductive material.

The electrical machine of any preceding clause, wherein the first bore is defined by a first surface, further including an electrically insulative material deposited the first surface.

The electrical machine of any preceding clause, wherein, the support block is formed from a polymer-based composite including soft magnetic particles.

The electrical machine of any preceding clause, wherein support block includes a set of cooling channels defined therethrough.

The electrical machine of any preceding clause, wherein the set of cooling channels are fluidly coupled with the electrically conductive winding.

The electrical machine of any preceding clause, wherein the cooling channels are fluidly coupled with at least one tooth.

The electrical machine of any preceding clause, wherein the cooling channels are spaced between the electrically conductive winding and a respective tooth.

The electrical machine of any preceding clause, wherein the cooling channels are fluidly coupled to a coolant source.

The electrical machine of any preceding clause, wherein the support block further defines a second bore extending axially therethrough, having a second electrically conductive winding extending axially therethrough.

The electrical machine of any preceding clause, wherein the first electrically conductive winding and the second electrically conductive winding are associated with different electrical phases with respect to each other.

The component for an electrical machine of any preceding clause, wherein the bore is a first bore and the electrically conductive winding is a first electrically conductive winding, wherein the support block further defines a second bore extending axially therethrough, having a second electrically conductive winding extending axially therethrough.

A method of forming an electrical machine, the method comprising: forming an annular body defining one of a stator or a rotor; disposing a respective support block within a respective slot defined on the annular body; and inserting an electrically conductive winding through a respective bore defined through the support block, wherein the electrically conductive winding includes a conductor core circumferentially surrounded by an electrically insulative layer.

The method of any preceding clause, further comprising fluidly coupling the support block to a coolant source.

The method of any preceding clause, further comprising receiving a fluid coolant flow through a cooling channel defined through the support block.

The method of any preceding clause, wherein the support block is formed from one of an electrically insulative material or an electrically conductive material.

## Claims

1. A component (52), (54) for an electrical machine (14), comprising:
an annular body (105), (113) defining a central bore (55), 107) having a central axis, the annular body (105), (113) including a set of circumferentially spaced radially extending teeth (104), (110) defining a set of slots (106), (111) between adjacent teeth (104), (110), the slots (106), (111) extending axially along a periphery of the annular body (105), (113);
a support block (131) having an elongate body (133) defining a first bore (135) extending axially therethrough disposed within a respective slot (106), (111); and
a first electrically conductive winding (90), (109) extending axially through the first bore (135).

2. The component (52), (54) for an electrical machine (14) of claim 1, wherein the component (52), (54) is one of a stator (54) or a rotor (52).

3. The component (52), (54) for an electrical machine (14) of any preceding claim, wherein the electrically conductive winding (90), (109) includes a conductor core (97) circumferentially surrounded by an electrically insulative layer (119).

4. The component (52), (54) for an electrical machine (14) of any preceding claim, wherein the support block (131) is formed from one of an electrically insulative material or an electrically conductive material.

5. The component (52), (54) for an electrical machine (14) of any one of claims 1 to 3, wherein the support block (131) is formed of a dual-phase magnetic material.

6. The component (52), (54) for an electrical machine (14) of any preceding claim, wherein the first bore (135) is defined by a first surface (141), further including an electrically insulative material deposited the first surface (141).

7. The component (52), (54) for an electrical machine (14) of claim 1, wherein, the support block (131) is formed from a polymer-based composite including soft magnetic particles.

8. The component (52), (54) for an electrical machine (14) of any preceding claim, wherein support block (131) defines a set of cooling channels (340) defined therethrough.

9. The component (52), (54) for an electrical machine (14) of claim 8, wherein the set of cooling channels (340) are fluidly coupled with the electrically conductive winding (90), (109).

10. The component (52), (54) for an electrical machine (14) of claim 8, wherein the cooling channels (340) are fluidly coupled with at least one tooth (104), (110).

11. The component (52), (54) for an electrical machine (14) of claim 8, wherein the cooling channels (340) are spaced between the electrically conductive winding (90), (109) and a respective tooth (104), (110).

12. The component (52), (54) for an electrical machine (14) of any one of claims 8 to 11, wherein the cooling channels (340) are fluidly coupled to a coolant source (81).

13. The component (52), (54) for an electrical machine (14) of any preceding claim, wherein the support block (131) further defines a second bore (136) extending axially therethrough, having a second electrically conductive winding (90), (109) extending axially therethrough.

14. A method (400) of forming an electrical machine (14), the method (400) comprising:
forming an annular body (105), (113);
disposing a respective support block (131) within a respective slot (106), (111) defined on the annular body (105), (113); and
inserting an electrically conductive winding (90), (109) through a respective first bore (135) defined through the support block (131).

15. The method (400) of claim 14, further comprising fluidly coupling the support block (131) to a coolant source (81).
